Europäisches Patentamt

European Patent Office

Office européen des brevets

(11) Veröffentlichungsnummer: **0 305 897 B1**

(12) EUROPÄISCHE PATENTSCHRIFT

(45) Veröffentlichungstag der Patentschrift: **08.04.92**

(21) Anmeldenummer: **88113861.4**

(22) Anmeldetag: **25.08.88**

(51) Int. Cl.⁵: **C02F 9/00**, C02F 5/00

(54) **Kompaktstation zur Kühlkreislaufwasserbehandlung.**

(30) Priorität: **02.09.87 DE 3729270**

(43) Veröffentlichungstag der Anmeldung:
**08.03.89 Patentblatt 89/10**

(45) Bekanntmachung des Hinweises auf die
Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**EP-A- 0 207 804**
**US-A- 4 284 501**
**US-A- 4 563 272**

(73) Patentinhaber: **Henkel Kommanditgesellschaft
auf Aktien**
**Postfach 1100 Henkelstrasse 67**
**W-4000 Düsseldorf-Holthausen(DE)**

(72) Erfinder: **Schulenburg, Michael, Dr.**
**Lilienweg 32**
**W-4020 Mettmann 2(DE)**
Erfinder: **Dietmar, Walter**
**Halbuschstrasse 110**
**W-4000 Düsseldorf 13(DE)**

**Beschreibung**

Die Erfindung richtet sich auf eine Wasserbehandlungsvorrichtung für das Kreislaufwasser offener Umlaufkühlsysteme, insbesondere Kühlturmkreislaufsysteme, bestehend aus einer mit ihrem Anfangs- und Endbereich an den Kreislaufwasserstrom des Umlaufkühlsystems angeschlossenen Rohrleitung für einen Teilstrom des Kühlwassers mit zugeordneter Leitfähigkeitsmeßsonde und damit in Wirkverbindung stehender Abschlämmvorrichtung, einem Filter und Dosiereinrichtungen für die Zugabe von Wasserbehandlungsmitteln in den Teilstrom sowie einer elektrischen Steuereinheit.

Bei offenen Kühlsystemen mit umlaufendem Kühlwasser ist es notwendig, durch Verdunstung auftretende Wasserverluste auszugleichen und dem Kühlkreislaufwasser Zusätze zur Verhinderung von Korrosionserscheinungen an metallischen Bauteilen sowie der Bildung organischer, anorganischer oder biologischer Ablagerungen zuzugeben. Zur Durchführung dieser Aufgabe sind Vorrichtungen bekannt, die einzelne, für die Behandlung des Kreislaufwassers notwendige Teilaufgaben, wie Analyse, Zudosierung von Chemikalien oder Teilfiltration von Schwebstoffen ausführen. Zur vollständigen Überwachung von Umlaufkühlsystemen sind daher zahlreiche unterschiedliche Vorrichtungen notwendig, welche in der Regel an verschiedenen, voneinander mehr oder weniger weit entfernten Stellen eines offenen Umlaufkühlsystems angeordnet sind, so daß zur Überwachung und Wartung der einzelnen Vorrichtungen, und somit zur Kontrolle des Kreislaufwassers offener Umlaufkühlsysteme, ein hoher personeller und technischer Aufwand notwendig bzw. die Überwachung des Zustandes des Kreislaufwassers sehr umständlich ist.

Eine Vorrichtung der eingangs bezeichneten Art, bei der mehrere Vorrichtungen zur Überwachung von Umlaufkühlsystemen zentral an einem Ort zusammengefaßt sind, ist aus der EP-A-207804 bekannt. Bei dieser Vorrichtung ist es von Nachteil, daß eine Nachdosierung an Wasserbehandlungsmittel in Abhängigkeit von den Abschlämmvorgängen erfolgt. Es wird davon ausgegangen, daß der abgeschlämmten Flüssigkeitsmenge die an anderer Stelle zugegebene Frischwassermenge entspricht und die Nachdosierung der Wasserbehandlungsmittel auf dieses Volumen bzw. diese Menge abgestimmt wird. Nun treten aber bei Kühlturmkreislaufsystemen Verdunstungs- und Sprühverluste in Größenordnungen von über 1 % der pro Zeiteinheit umgewälzten Kreislaufwassermenge auf. Mit diesen Sprühverlusten werden auch die Wasserbehandlungsmittel aus dem System ausgetragen. Diese Kreislaufwasserverluste werden durch die Zugabe von Frischwasser ausgeglichen. Bei der Vorrichtung nach der EP-A-207804 werden diese Verluste aber nicht berücksichtigt, so daß es hier im Laufe der Zeit zu einem Absinken der Konzentration an Wasserbehandlungsmittel unter die gewünschten Konzentrationswerte kommen kann.

Aufgabe der Erfindung ist es daher, eine gattungsgemäße Vorrichtung kompakter Bauart dahingehend zu verbessern, daß die Einbeziehung weiterer Wasserkennwerte zur Überwachung und Behandlung des Kreislaufwassers vorgesehen und die Einhaltung von gewünschten Konzentrationswerten verschiedener Wasserbehandlungsmittel über einen längeren Zeitraum automatisch sichergestellt ist.

Bei einer Vorrichtung der gattungsgemäßen Art wird diese Aufgabe gemäß der Erfindung dadurch gelöst, daß die Wasserbehandlungsvorrichtung in dem Teilstrom angeordnet eine pH-Wert-Meßeinrichtung und eine damit in Wirkverbindung stehende Säuredosiereinrichtung sowie eine Zusatzwasserleitung für Frischwasser mit Anschluß an den Kreislaufwasserstrom aufweist, in welcher ein Zusatzstrommengenzähler, insbesondere ein Wasserzähler mit Impulsgeber, angeordnet ist, der über die elektrische Steuereinheit in Wirkverbindung mit den Dosiereinrichtungen für die Wasserbehandlungsmittel steht und eine mengenproportionale Dosierung der Wasserbehandlungsmittel bewirkt, wobei die Auslösung der Dosiereinrichtung für die Säure in Abhängigkeit vom gemessenen pH-Wert, die Auslösung der Dosiereinrichtung für das Korrosionsschutzmittel in Abhängigkeit von der gemessenen Zusatzwassermenge und die Auslösung der Dosiereinrichtungen für die Biozide zeitgesteuert in regelmäßigen Abständen erfolgt.

Durch die erfindungsgemäße Vorrichtung wird der für die Kontrolle des Kreislaufwassers offener Umlaufsysteme notwendige technische und personelle Aufwand deutlich verringert. Die Überwachung und Behandlung des Kreislaufwassers erfolgt nur noch an zentraler Stelle in einer standardisierten Moduleinheit, welche die für die Kontrolle des Kreislaufwassers notwendigen Einrichtungen enthält. Diese Einrichtungen sind an dem Anbringungsort der Moduleinheit direkt überwachbar und zu warten. Aufgrund des automatisierten Überwachungs- und Behandlungsablaufes in der Moduleinheit, durch die in ihrer Leistungsauslegung und Dimensionierung aufeinander abgestimmten Einrichtungen ist eine labormäßige Analyse des Kreislaufwassers nur noch einmal pro Woche und nicht mehr täglich durchzuführen. Bei der erfindungsgemäßen Vorrichtung durchfließt zumindest ein Teilstrom eine kompakte und standardisierte Moduleinheit, welche auf einer geringen Nutzfläche platzsparend alle für die Kreislaufwasserbehandlung wesentlichen Einrichtungen enthält. Hier wird nacheinander, wobei die Reihenfolge durchaus abänderbar ist, der pH-Wert des Kühlwassers gemessen und in Abhängigkeit von dem gemessenen pH-Wert gegebenenfalls eine gewisse Säuremenge zudosiert, um den pH-Wert des Kreislaufwassers in einem bestimmten Bereich zu halten und damit beispielsweise Kalkablagerungen und Zinkablagerungen entgegenzuwirken; wird die Leitfähigkeit des Wasserteilstromes induktiv gemessen, um die aus der Verdunstung resultierende Aufsalzung des Kreislaufwassers feststellen und durch Betätigung der zugeordneten Abschlämmvorrichtung sowie entsprechende Frischwasserzufuhr auf eine gewünschte Salzkonzentration in dem Kreislaufwasser einstellen zu können; wird dem Wasserteilstrom Korrosionsschutzmittel in Abhängigkeit von der dem Kreislaufwasser zum Ausgleich von Verdunstungen zugegebenen Zusatzwassermenge zugeführt; werden dem Wasserteilstrom in regelmäßigen Zeitintervallen organische und/oder anorganische Biozide zur Vermeidung von biologischen, insbesondere mikrobiologischen, Ablagerungen im offenen Umlaufkühlsystem zugeführt; schließlich wird der Wasserteilstrom in einem Filter mit automatischer Rückspülung von Schwebstoffteilen gereinigt. Diese Verfahrensschritte sind für die Aufrechterhaltung der Kühlleistung des Kühlmediums Wasser in offenen Umlaufsystemen ausreichend und ohne aufwendige und komplizierte technische Einrichtungen, wie zum Beispiel eine Überwachungselektronik, durchführbar.

Aufgrund der mengenproportionalen Dosierung in Verbindung mit der Leitfähigkeitsmessung mit angeschlossener Abschlämmung stellen sich im Kreislaufwasser konstante Verhältnisse ein, die ein wesentlich größeres Überwachungsintervall als die tägliche analytische Kontrolle ermöglichen.

Unter mengenproportional ist in diesem Falle zu verstehen, daß die Zudosierung in Abhängigkeit von dem pro Zeiteinheit dem Kreislaufwasser zum Ausgleich von Verdunstungen und Abschlämmungen zugegebenen Zusatzwasservolumen erfolgt. Eine derart gestaltete Zudosierung hat sich für die Durchführung des Verfahrens als besonders zweckmäßig erwiesen.

Durch einen Zusatzstrommengenzähler werden die durch die Dosiereinrichtungen abzugebenden Mengen beeinflußt. Mit einem Zusatzstrommengenzähler ist das pro Zeiteinheit aus der Zusatzwasserleitung ausströmende Zusatzstromvolumen feststellbar und automatisch registrierbar, welches zum Ausgleich von Wasserverlusten dem Kreislaufwasser zugegeben wird und als Bestimmungsgröße die von den einzelnen Einrichtungen abzugebende Menge an Kühlwasserbehandlungsmitteln bestimmt.

Die erfindungsgemäße Vorrichtung weist alle für eine Kühlwasserbehandlung wesentlichen Einrichtungen auf und ist problemlos an bevorzugter und zentraler Stelle im Kühlkreislaufwassersystem anzuordnen. Eine solche Moduleinheit ist einfach zu warten und zu überwachen.

In Ausgestaltung sieht die Erfindung vor, daß die Vorrichtung in ihren den Teilwasserstrom aufnehmenden Einrichtungen derart dimensioniert ist, daß die kontinuierlich in etwa 10 % des an einer Entnahmestelle vorbeiströmenden Kreislaufwasserstroms aufnimmt. Diese kontinuierlich behandelte Teilstrommenge ist zur Aufrechterhaltung der Funktionsfähigkeit offener Umlaufkühlsysteme ausreichend und kann in einer kompakten Moduleinheit behandelt werden. Die durch die Vorrichtung geleitete Teilstrommenge ist ausreichend, um dem Kühlkreislaufsystem die zur Aufrechterhaltung des Kühlvermögens benötigten Zusätze in ausreichendem Maße zuführen zu können.

Schließlich sieht die Erfindung vor, daß in der Rohrleitung ein Durchflußmeßgerät und ein Filter mit automatischer Rückspüleinrichtung angeordnet sind.

Die Erfindung ist nachstehend anhand der Zeichnung beispielsweise näher erläutert. Diese zeigt in

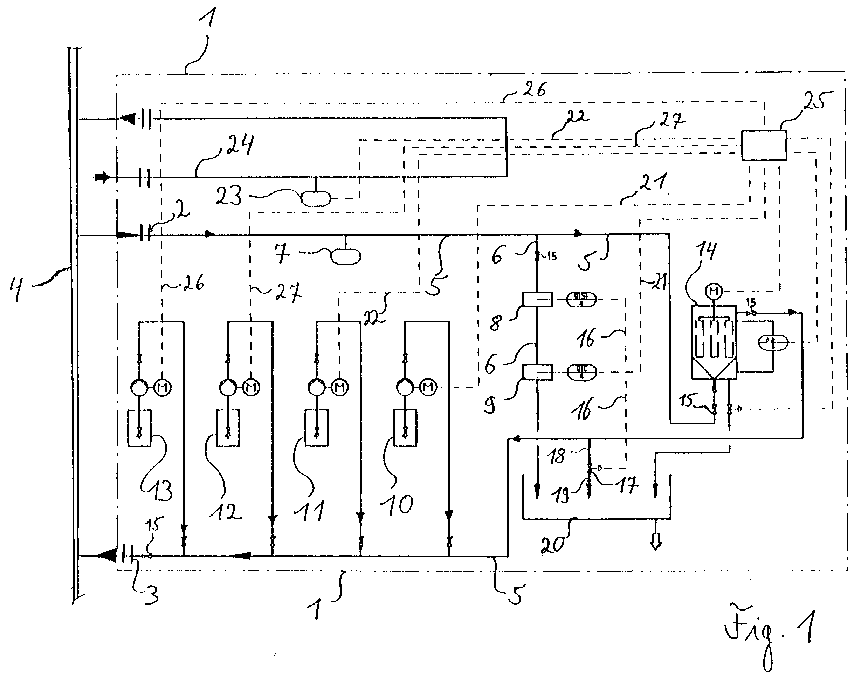

Fig. 1 ein Prinzip-Schaltbild einer erfindungsgemäßen Vorrichtung

Die insgesamt mit 1 bezeichnete standardisierte Moduleinheit zur Behandlung des Kreislaufwassers offener Umlaufkühlsysteme umfaßt die in Fig. 1 innerhalb des strichpunktierten Rahmens eingezeichneten Einrichtungen. Sie ist mit Flanschverbindungen 2 und 3 mit dem Kreislaufwasserstrom des Kühlsystems, welcher durch die Leitung 4 geführt wird, verbunden. An der Anschlußstelle 2 wird ein Teilstrom abgezweigt, entsprechend den Pfeilen in den Rohrleitungen 5 und/oder 6 durch die Kühlwasserbehandlungsstation geleitet und an der Anschlußstelle 3 wird der nicht durch die Leitung 6 geleitete Teilstrom dem Kreislaufwasserstrom wieder zugeführt. Die Rohrleitung 5 ist so ausgelegt, daß sie kontinuierlich in etwa 10 % des an der Entnahmestelle 2 vorbeiströmenden Kreislaufwasserstromes aufnehmen kann. Die der Moduleinheit zufließende Teilstrommenge wird von einem Durchflußmeßgerät 7 gemessen. Des weiteren sind in der Rohrleitung 5 in der Moduleinheit 1 Dosiereinrichtungen 10, 11, 12 und 13 sowie eine Filtereinheit 14 mit automatischer Rückspüleinrichtung, eine Abschlämmvorrichtung 17, 18, 19, 20 und Ventile 15 angeordnet.

In Fließrichtung vor dem Filter 14 zweigt von der Leitung 5 die Leitung 6 ab, welche einen Teilstrom von max. 200 l/h des in der Moduleinheit zu behandelnden Kreislaufwassers einer induktiven Leitfähigkeitsmessung 8 und einer pH-Wert-Messung 9 zuführt. Die Leitung 6 zweigt hinter dem Durchflußmeßgerät 7, also quasi unmittelbar hinter der Entnahmestelle aus dem Hauptstrom, von der Leitung 5 ab und mündet hinter den Meßeinrichtungen 8 und 9 in den Ablauftrichter 20 der Abschlämmvorrichtung ein. Zur Regelung des Kühlwasserteilstromes innerhalb der Moduleinheit sind in den Leitungen Ventile 15 angeordnet.

Die induktive Leitfähigkeitsmeßeinrichtung 8 ist durch eine elektrische Leitung 16 wirkmäßig mit dem Abschlämmventil 17 der Abschlämmvorrichtung verbunden, welches in geöffneter Stellung einen Abfluß von Kreislaufwasser durch die Leitungen 18 und 19 aus der Kühlkreislaufwasserbehandlungsstation heraus ermöglicht. Zusammen mit dem Ablauftrichter 20 bilden die Rohrleitungen 18 und 19 sowie das Abschlämmventil 17 eine Ausführungsform der Abschlämmvorrichtung. Die induktive Leitfähigkeitsmeßung 8 ist auf einen bestimmten Leitfähigkeitswert eingestellt und bewirkt bei Überschreitung dieses Wertes, beispielsweise bei erhöhter Salzkonzentration, ein Öffnen des Abschlämmventiles 17. Die pH-Wert-Meßeinrichtung 9 ist über eine elektrische Leitung 21 mit einer Säuredosiereinrichtung 10 verbunden. Die pH-Wert-Meßeinrichtung 9 ist auf einen bestimmten pH-Wert eingestellt und bewirkt bei Überschreiten dieses pH-Wertes, daß die Säurezudosiereinrichtung 10 Säure, beispielsweise konzentrierte Schwefelsäure, in die Leitung 5 einpumpt. Aus der Dosiereinrichtung 11 wird Korrosionsschutzmittel, beispielsweise ein stabilisiertes, ggf. zinkhaltiges Behandlungsprodukt, in die Leitung 5 eingeleitet. Die Dosiereinrichtung 11 ist über eine elektrische Leitung 22 mit einem Wasserzähler mit Impulsgeber, dem Zusatzstrommengenzähler 23, verbunden. Dieser Zusatzstrommengenzähler 23 ist in einer Zusatzwasserleitung 24 angeordnet, durch welche dem Kühlkreislaufsystem Wasser zum Ausgleich von verdunstetem und in die Atmosphäre entwichenem sowie abgeschlämmtem Wasser zugeführt wird. In Abhängigkeit von der dem Kühlkreislauf durch die Zusatzwasserleitung 24 ohne Korrosionsschutzmittel zugesetzten Zusatzwassermenge, wird, gesteuert von dem Wasserzähler mit Impulsgeber 23, die Dosiereinrichtung 11 betätigt und Korrosionsschutzmittel in die Leitung 5 eingeleitet. Die Dosiereinrichtung 12 leitet anorganische und die Dosiereinrichtung 13 leitet organische Biozide in die Leitung 5 ein. Dies geschieht in regelmäßigen zeitlichen Abständen, wozu die Dosiereinrichtungen 12 und 13 durch eine Steuereinheit 25, mit welcher sie über elektrische Leitungen 26 und 27 wirkmäßig verbunden sind, in Gang gesetzt werden. Die Dosiereinrichtungen 10, 11, 12 und 13 bestehen zumindest aus einem Vorratsgefäß für die jeweiligen Behandlungssubstanzen, einer Pumpe und den erforderlichen Armaturen.

Mit Hilfe des Durchflußmeßgerätes 7 wird die die Moduleinheit 1 durchfließende Teilstromwassermenge festgestellt, um die erwünschte 10 %-ige Teilstromfiltration sicherstellen zu können. Diese 10 %-ige Teilstrommenge dient weiterhin zur Vorverdünnung der durch die Dosiereinrichtungen 10, 11, 12 und 13 jeweils abgegebenen Mengen konzentrierter Behandlungssubstanz, um Konzentrationsspitzen im Hauptstrom zu vermeiden.

Die Dosierzeiten und -mengen sind beispielsweise abhängig von der Wärmeleistung des Kühlsystems, der Wasserzusammensetzung und der produktabhängigen Einsatzkonzentration einzelner Behandlungschemikalien.

**Patentansprüche**

1. Wasserbehandlungsvorrichtung für das Kreislaufwasser offener Umlaufkühlsysteme, insbesondere Kühlturmkreislaufsysteme, bestehend aus einer mit ihrem Anfangs- (2) und Endbereich (3) an den Kreislaufwasserstrom des Umlaufkühlsystems angeschlossenen Rohrleitung (5) für einen Teilstrom des Kühlwassers mit Zugeordneter Leitfähigkeitsmeßsonde (8) und damit in Wirkverbindung stehender Abschlämmvorrichtung (17, 18, 19, 20), einem Filter (14) und Dosiereinrichtungen (11, 12, 13) für die Zugabe von Wasserbehandlungsmitteln in den Teilstrom sowie einer elektrischen Steuereinheit (25),
dadurch gekennzeichnet,
daß die Wasserbehandlungsvorrichtung in dem Teilstrom angeordnet eine pH-Wert-Meßeinrichtung (9) und eine damit in Wirkverbindung stehende Säuredosiereinrichtung (10) sowie eine Zusatzwasserleitung (24) für Frischwasser mit Anschluß an den Kreislaufwasserstrom aufweist, in welcher ein Zusatzstrommengenzähler (23), insbesondere ein Wasserzähler mit Impulsgeber, angeordnet ist, der über die elektrische Steuereinheit (25) in Wirkverbindung mit den Dosiereinrichtungen (10, 11, 12, 13) für die Wasserbehandlungsmittel steht und eine mengenproportionale Dosierung der Wasserbehandlungsmittel bewirkt, wobei die Auslösung der Dosiereinrichtung (10) für die Säure in Abhängigkeit vom gemessenen pH-Wert, die Auslösung der Dosiereinrichtung (11) für das Korrosionsschutzmittel in Abhängigkeit von der gemessenen Zusatzwassermenge und die Auslösung der Dosiereinrichtungen (12, 13) für die Biozide zeitgesteuert in regelmäßigen Abständen erfolgt.

2. Wasserbehandlungsvorrichtung nach Anspruch 1,
dadurch gekennzeichnet,
daß sie in ihren den Teilwasserstrom aufnehmenden Einrichtungen (5, 6) derart dimensioniert ist, daß sie kontinuierlich in etwa 10 % des an einer Entnahmestelle (2) vorbeiströmenden Kreislaufwasserstroms aufnimmt.

3. Wasserbehandlungsvorrichtung nach einem der vorangehenden Ansprüche, dadurch gekennzeichnet, daß in der Rohrleitung (5) ein Durchflußmeßgerät (7) und ein Filter (14) mit automatischer Rückspüleinrichtung angeordnet sind.

**Claims**

1. Water treatment device for the circulating water of open circulation cooling systems, in particular cooling tower circulation systems, consisting of a pipe duct (5), which is connected by its beginning region (2) and its end region (3) to the circulating water flow of the circulation cooling system, for a partial flow of the cooling water with associated conductivity - measuring prove (8) and an elutriation device (17, 18, 19, 20) standing in operative connection therewith, a filter (14) and metering equipments (11, 12, 13) for the addition of water treatment agents Into the partial flow as well as an electrical control unit (25), characterised thereby, that the water treatment device is arranged in the partial flow and displays a pH-value-measuring equipment (9) and an acid-metering equipment (10) standing in operative connection therewith as well as a make-up water duct (24) for fresh water with a connection to the circulating water flow, in which a make-up flow quantity counter (23) is arranged, in particular a water counter with pulse generator, which stands in operative connection by way of the electrical control unit (25) with the metering equipments (10, 11, 12, 13) for the water treatment agents and effects a quantity-proportional metering of the water treatment agents, wherein the initiation of the metering equipment (10) for the acid takes place in dependence on the measured pH value, the initiation of the metering equipment (11) for the corrosion protection agent takes place in dependence on the measured make-up water quantity and the initiation of the metering equipments (12, 13) for the biocides takes place at regular intervals controlled in time.

2. Water treatment device according to claim 1, characterised thereby, that it is dimensioned in such a manner in its equipments (5, 6) receiving the partial water flow that it continuously receives about 10% of the circulating water flow flowing past a withdrawal point (2).

3. Water treatment device according to one of the preceding claims, characterised thereby, that a throughflow-measuring device (7) and a filter (14) with automatic flushing-back equipment are arranged in the pipe duct (5).

**Revendications**

1. Dispositif de traitement d'eau pour l'eau de circulation d'installations à circuit d'eau de refroidissement fonctionnant à découvert et, en particulier, installations à circuit d'eau de tours de refroidissement, ce dispositif se composant d'une conduite tubulaire (5) raccordée par sa zone de début (2) et sa zone terminale (3) au courant d'eau de circulation du circuit de refroidissement afin d'obtenir un courant partiel d'eau de refroidissement au moyen d'une sonde de conductibilité (8) qui lui est affectée et d'un dispositif de purge (17, 18, 19, 20) qui est en relation active avec cette sonde, d'un filtre (14) et de dispositifs de dosage (11, 12, 13) permettant l'adjonction au courant partiel de substances de traitement de l'eau, ainsi que d'un organe de commande électrique (25); dispositif caractérisé par le fait qu'il est placé dans le courant partiel d'eau de refroidissement et qu'il comporte un dispositif (9) de mesure de la valeur du pH et un dispositf (10) de dosage d'acidité en relation active avec ce dernier (9), ainsi qu'une conduite d'eau d'appoint (24) servant à fournir de l'eau fraîche et raccordée au circuit du courant d'eau de refroidissement, cette conduite (24) étant pourvue d'un compteur (23) de débit d'eau d'appoint, en particulier un compteur pourvu d'un émetteur d'impulsions qui, grâce à l'organe de commande électrique (25), est en liaison active avec les dispositifs de dosage (10, 11, 12, 13) des substances de traitement de l'eau afin que le dosage des substances de traitement de l'eau soit effectué de manière proportionnelle à la quantité d'eau débitée, le déclenchement du dispositif (10) de dosage d'acidité dans ce traitement dépendant de la valeur du pH mesurée, et celui du dispositif (11) de dosage d'un agent anticorrosif dépendant du volume d'eau d'appoint mesuré, le déclenchement des dispositifs (12, 13) de dosage des biocides étant synchronisé à intervalles réguliers.

2. Dispositif de traitement d'eau selon la revendication 1, caractérisé par le fait qu'il est dimensionné au niveau de ses dispositifs (5, 6) de captage du courant partiel d'eau de refroidissement de manière à capter continuellement environ dix pour-cent du courant de l'eau de circulation qui passe devant une prise d'eau (2).

3. Dispositif de traitement d'eau selon l'une ou l'autre des revendications 1 ou 2, caractérisé par le fait qu'un débitmètre (7) et un filtre (14) à dispositif automatique de lavage en arrière sont installés dans la conduite rigide (5).

Fig. 1

EP 0 305 897 B1